# EUROPÄISCHE PATENTSCHRIFT

(11) **EP 2 985 896 B1**
(45) Veröffentlichungstag und Bekanntmachung des Hinweises auf die Patenterteilung: **25.01.2017**
(21) Anmeldenummer: 15180497.8
(22) Anmeldetag: 11.08.2015
(51) Int. Cl.: H02M 1/42, H02M 7/00, H02M 1/00, H02P 6/14

(54) **SYSTEM ZUR ANHEBUNG DES NETZSEITIGEN LEISTUNGSFAKTORS VON DREIPHASIG GESPEISTEN EC-MOTOREN**
SYSTEM FOR INCREASING THE NETWORK-SIDE POWER FACTOR OF THREE PHASE EC MOTORS
SYSTEME D'ACCENTUATION DU FACTEUR DE PUISSANCE COTE RESEAU DE MOTEURS EC TRIPHASES

(30) Priorität: 12.08.2014 DE 102014111451
(43) Veröffentlichungstag der Anmeldung: 17.02.2016
(73) Patentinhaber: ebm-papst Mulfingen GmbH & Co. KG, 74673 Mulfingen (DE)
(72) Erfinder: Schneider, Fabian, 74585 Rot am See (DE)
(74) Vertreter: Wendels, Stefan

(56) Entgegenhaltungen:
- EP-A2- 0 782 245
- JP-A- 2004 056 947
- MADISHETTI SANDEEP ET AL: "Improved power quality converter for direct torque control-based induction motor drives", IET POWER ELECTRONICS, IET, UK, Bd. 6, Nr. 2, 1. Februar 2013 (2013-02-01) , Seiten 276-286, XP006046267, ISSN: 1755-4535, DOI: 10.1049/IET-PEL.2012.0251
- MINIBOCK J ET AL: "Comparative theoretical and experimental evaluation of bridge leg topologies of a three-phase three-level unity power factor rectifier", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, Bd. 3, 17. Juni 2001 (2001-06-17), Seiten 1641-1646, XP010559463, DOI: 10.1109/PESC.2001.954354 ISBN: 978-0-7803-7067-8
- ALAHUHTALA J ET AL: "Space vector modulated four-wire unidirectional three-phase/level/switch (VIENNA) rectifier with an additional leg for DC link voltage balancing", APPLIED POWER ELECTRONICS CONFERENCE AND EXPOSITION, 2008. APEC 2008. TWENTY-THIRD ANNUAL IEEE, IEEE, PISCATAWAY, NJ, USA, 24. Februar 2008 (2008-02-24), Seiten 238-244, XP031253254, ISBN: 978-1-4244-1873-2
- JOHANN W KOLAR ET AL: "The essence of three-phase PFC rectifier systems", TELECOMMUNICATIONS ENERGY CONFERENCE (INTELEC), 2011 IEEE 33RD INTERNATIONAL, IEEE, 9. Oktober 2011 (2011-10-09), Seiten 1-27, XP032071349, DOI: 10.1109/INTLEC.2011.6099838 ISBN: 978-1-4577-1249-4

## Beschreibung

Die Erfindung betrifft ein Steuerungssystem zur Anhebung des netzseitigen Leistungsfaktors λ von dreiphasig gespeisten EC-Motoren nach den Merkmalen von Patentanspruch 1 sowie ein Verfahren unter Verwendung eines solchen Steuerungssystems gemäß den Merkmalen von Patentanspruch 12.

EC-Motoren (EC = elektronisch kommutiert) sind hinlänglich bekannt und werden für zahlreiche Anwendungen eingesetzt. Bei einem EC-Motor handelt es sich bekanntlich um einen permanentmagnetisch erregten, schleifringlosen Synchronmotor, der typischerweise mit einem Rotorpositionssensor versehen ist und über eine Kommutierungselektronik (Steuer- und Leistungselektronik) an einer Gleichspannung betrieben wird. Diese Gleichspannung kann zum Beispiel als Zwischenkreis-Gleichspannung durch Gleichrichtung einer Netz-Wechselspannung gewonnen werden. Die Kommutierungselektronik erzeugt aus der Gleichspannung in Abhängigkeit von der Rotorposition eine insbesondere dreiphasige Wechselspannung zur Erzeugung eines Drehfeldes in der Statorwicklung.

Durch die rein elektronische, schleifringlose Kommutierung treten weder Bürstengeräusche noch Verschleiß auf. Diese Motoren sind daher wartungsfrei. Dank der elektronischen Steuerung können problemlos Zusatzfunktionen realisiert werden, wie eine stufenlose Drehzahlregelung, eine Drehrichtungsumkehr, ein Sanftanlauf und/oder einen Blockierschutz. Zur Drehzahleinstellung erfolgt in der Regel eine PWM-Taktung mit einstellbarem oder regelbarem Aussteuergrad (Taktverhältnis).

Es ist bekannt, dass eine Gleichspannung für einen EC-Motor zum Beispiel als Zwischenkreis-Gleichspannung aus einer Netz-Wechselspannung mittels eines Wechselrichters gewonnen wird, der üblicherweise aus einem kapazitiven Zwischenkreis gespeist wird. Für eine möglichst konstante Gleichspannung, ist im Zwischenkreis eine relativ hohe, aus einem oder mehreren Kondensatoren gebildete Kapazität angeordnet. Die Aufladung der Kapazität erfolgt üblicherweise über den Gleichrichter. Dies führt aber zu einem hohen Oberschwingungsgehalt und einem schlechten Leistungsfaktor.

Um dies zu korrigieren werden häufig so genannte PFC-Schaltungen eingesetzt (PFC = Power Factor Correction). Solche PFC-Schaltungen können in zwei Gruppen unterteilt werden. Die erste Gruppe bilden die passiven PFC-Schaltungen in Form von Drosseln oder anderen passiven Bauelementen, die zweite Gruppe bilden aktive PFC-Schaltungen, die häufig in Form von Hochsetzstellern, auch Step-Up-Converter genannt, aufgebaut sind, vgl. hierzu zum Beispiel die Publikationsschrift EP 2 267 882 A1 .

Aus der Publikation von IVIADISHETTI SANDEEP ET AL: "Improved power quality converter for direct torque control-based induction motor drives", IET POWER ELECTRONICS, IET, UK, Bd. 6, Nr. 2, 1. Februar 2013 (2013-02-01), Seiten 276-286, XP006046267, ISSN: 1755-4535, DOI: 10.1049/IET-PEL.2012.0251 ist ein verbesserter Leistungskonverter zur direkten Steuerung von Motorantrieben bekannt.

In der Publikation von IVIINIBDCK J ET AL: "Comparative theoretical and experimental evaluation of bridge leg topologies of a three∼phase three-level unity power factor rectifier", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001 ; [ANNUAL POWER ELECTRONICS SPECIALISTS CONFERENCE], NEW YORK, NY : IEEE, US, Bd. 3, 17. Juni 2001 (2001-06-17), Seiten 1641-1646, XP010559463, DOI: 10.1109/PESC.2001.954354 ISBN: 978-0-7803-7067-8 wird die theoretische und experimentelle Untersuchung von Drei-Phasen Power-Faktor-Verstärkern beschrieben.

Aus der Publikation von ALAHUHTALA J ET AL: "Space vector modulated fourwire unidirectional three-phase/level/switch (VIENNA) rectifier with an additional leg for DC link voltage balancing", APPLIED POWER ELECTRONICS CONFERENCE AND EXPOSITION, 2008. APEC 2008. TWENTY-THIRD ANNUAL IEEE, IEEE, PISCATAWAY, NJ, USA, 24. Februar 2008 (2008-02-24), Seiten 238-244, XP031253254, ISBN: 978-1-4244-1873-2 ist eine Raumvektormodulation eines Verstärkers bekannt.

Aus der EP 0 782 245 A2 ist ein Drei-Phasen-Brückenverstärker mit drei bi-di-rektionalen Brücken bekannt.

Die Publikation von JOHANN W KOLAR ET AL: "The essence of three-phase PFC rectifier systems", TELECOMMUNICATIONS ENERGY CONFERENCE (INTELEC), 2011 IEEE 33RD INTERNATIONAL, IEEE, 9. Oktober 201 1 (2011 - 10-09), Seiten 1-27, XP032071349, DOI: 10.1109/INTLEC.2011.6099838 ISBN: 978-1-4577-1249-4 beschäftigt sich mit Drei-Phasen PFC-Verstärkersystemen.

Aus der JP 2004 056947 A ist eine Lösung zur Reduzierung der Schaltverluste mit einem Drei-Phasen-Verstärker-Schaltkreis offenbart.

Ein Nachteil dieses PFC-Konzeptes ist der Bedarf eines Gleichrichters sowie die Integration einer zusätzlichen PFC-Drossel. Der Gleichrichter verursacht aufgrund einer Vorwärtsspannung der Dioden unerwünschte Verluste. Die PFC-Drossel ist vergleichsweise teuer und benötigt einen großen Bauraum.

Ein weiterer Aspekt bei der Auslegung der Topologie von Zwischenkreisen ist die Problematik des netzseitigen Leistungsfaktors λ. In Stromversorgungseinrichtungen wird zur Vermeidung von Übertragungsverlusten ein möglichst hoher Leistungsfaktor angestrebt. Als Leistungsfaktor bezeichnet man in der Elektrotechnik das Verhältnis vom Betrag der Wirkleistung P zur Scheinleistung S. Im Idealfall beträgt der Leistungsfaktor 1, praktisch liegt er aber bei induktiver Last nur etwa bei 0,95 (induktiv). Ferner besteht bei Asynchronmaschinen die Gefahr der Selbsterregung, wenn die Blindleistung vollständig oder nahezu vollständig kompensiert wird. Andererseits führt ein kapazitiver Leistungsfaktor zu Überspannungen an Isolationen von Leitungen und elektrischen Verbrauchern.

Bei den im Stand der Technik bekannten Konzepten für dreiphasig gespeiste EC-Motoren mit einer passiven B6 Brückengleichrichterschaltung zur Speisung des Gleichspannungszwischenkreises aus dem Dreiphasen-Wechselstromnetz können Leistungsfaktoren von etwa 0,95 bei einem Stromverzerrungsfaktor von etwa 30% erzielt werden. Bekanntermaßen hängt der Leistungsfaktor infolge des mathematischen Zusammenhangs sowohl von dem Verzerrungsfaktor THD (Total Harmonic Distortion) als auch von der Phasenverschiebung ϕ der Grundwellen ab, wobei ein Anstieg des Verzerrungsfaktors THD zu einer Reduktion des Leistungsfaktors führt.

Es ist demnach Aufgabe der vorliegenden Erfindung, vorbesagte Nachteile zu überwinden und ein System zur Anhebung des netzseitigen Leistungsfaktors λ von dreiphasig gespeisten EC-Motoren mit Gleichspannungszwischenkreis bereitzustellen, welches kostengünstig und platzsparend realisiert werden kann und mit dem das Verhältnis der aufgenommenen Wirkleistung zur Scheinleistung auf nahe dessen Idealwerts von 1 erhöht werden kann.

Diese Aufgaben werden durch eine Schaltungsanordnung mit den Merkmalen des Patentanspruchs 1 sowie durch das Verfahren mit den Merkmalen des Patentanspruchs 12 gelöst.

Ein erster Aspekt der vorliegenden Erfindung ist der Austausch der im Stand der Technik bekannten Brückenzweige sowie der großvolumigen Längsdrossel der Brückengleichrichterschaltung (B6) durch aktive Brückenzweige. Im Stand der Technik wird die Brückengleichrichterschaltung aus insgesamt sechs langsamen Gleichrichterdioden und einer Längsdrossel gebildet, wobei jeweils zwei Dioden in einem Brückenzweig verwendet werden, in welcher die drei Halbbrückenzweige, bestehend aus einer gleichgerichteten Serienschaltung aus zwei Gleichrichterdioden jeweils kathodenseitig mit dem positiven und anodenseitig mit dem negativen Zwischenkreispotential sowie an dem Mittelabgriff mit den drei Netzphasen verbunden sind.

Die erfindungsgemäßen aktiven Brückenzweige bestehen aus sechs Dioden und einem aktiven Schalter wie zum Beispiel einem MOSFET oder IGBT (Bipolartransistor mit isolierter Gate-Elektrode). Ferner wird in jedem Brückenzweig zur Strommessung zusätzlich ein Shunt-Widerstand Rs eingefügt. Die zur passiven Leistungsfaktorkorrektur zwischen Gleichrichterhalbbrücken und Zwischenkreis im Pfad eingefügte großvolumige Längsdrossel kann durch die erfindungsgemäße Topologie vollständig entfallen. Des Weiteren erfolgt eine Kontaktierung des Mittelabgriffs (DCM) der aus einer Serienschaltung von zwei Kondensatoren gebildeten Zwischenkreiskapazität. Aufgrund der gewählten Dreipunkttopologie können die aktiven Bauteile mit einer Spannungsfestigkeit von 600 V bei Netzeingangsspannungen von bis zu 530 V und Zwischenkreisspannungen bis zu 800 V eingesetzt werden, was die Auswahl von Bauteilen mit geringeren Durchlass- und Schaltverlusten im Vergleich zu einer Zweipunkttopologie mit 1200V Halbleitern ermöglicht.

Jeder aktive Halbbrückenzweig weist vier Knotenpunkte auf und besteht aus je zwei extrem schnellen Freilaufdioden DF+ und DF- sowie zwei mittel-schnellen Mittelpunktsdioden DM+ und DM- und zwei langsamen Netzdioden DN+ und DN-. An einem ersten Knotenpunkt sind die Kathoden der langsamen Netzdiode DN+ und der Mittelpunktsdiode DM- sowie die Anode der schnellen Freilaufdiode DF+ und der Drain- bzw. Kollektor-Anschluss des Schalters S verbunden. An einem zweiten Knotenpunkt sind die Anoden der Netzdiode DN- und der Mittelpunktsdiode DM+ sowie die Kathode der Freilaufdiode DF- und der erste Anschluss des Shunt-Widerstandes verbunden. Der zweite Anschluss des Shuntwiderstandes ist wiederum mit dem Source- bzw. Emitter des Schalters S verbunden.

Am dritten Knotenpunkt sind die Kathode der Netzdiode DN- sowie die Anode der Netzdiode DN+ zusammengeschaltet und es besteht eine Verbindung zu den jeweiligen Netzphasen. Der Zwischenkreismittelabgriff wird an dem vierten Knotenpunkt mit der Kathode der Mittelpunktsdiode DM+ und der Anode der Mittelpunktsdiode DM- verbunden.

Die Anschlüsse des Shunt-Widerstandes sowie das Gate des Schalters dienen als Verbindung zu der auf dem jeweiligen Schalterpotential der Halbbrücken liegenden Stromregler. Das positive Zwischenkreispotential DC+ ist mit der Kathode der Freilaufdiode DF+, das negative Zwischenkreispotential DC- mit der Anode der Freilaufdiode DF- verbunden.

Ein weiterer Aspekt der vorliegenden Erfindung betrifft die Beseitigung schaltfrequenter Anteile in den Eingangsgrößen. Hierzu wird die zuvor beschriebene aktive Brückenschaltung mit den aktiven Brückenzweigen in eine netzseitige Filterstruktur eingebunden. Die netzseitige Filterstruktur wird in vorteilhafter Weise aus einem einstufigen bzw. zweistufigen LC-Filter sowie einer bestimmungsgemäß vorgesehenen kapazitiven Rückkopplung des Sternpunktes der Filterkapazitäten zum Zwischenkreismittelabgriff DCM gebildet. In einer Ausführungsform mit einem zweistufigen Filter erfolgt die Rückkopplung aus dem Sternpunkt derjenigen der Brückenschaltung näherliegenden Filterkapazitäten. In die Rückkopplungsstrecke, die mit dem Zwischenkreismittelpunkt DCM verbunden ist, wird ferner eine Kapazität (Kondensator) eingebracht. Aufgrund dieser Schaltungstopologie und der kapazitiven Verbindung des Sternpunktes der Filterkondensatoren mit dem Zwischenkreismittelpunkt DCM über den Kondensator wird ein gezielter Gleichtaktstromfluss zum Zwischenkreis ermöglicht und die Gleichtaktstörungsaussendung über die Netzphasen merklich reduziert.

Ein weiterer Aspekt der vorliegenden Erfindung betrifft die Regelung des Systems, d.h. der Schaltungsanordnung. In einer bevorzugten Ausführungsform wird zur Regelung eine Kaskadenregelung vorgesehen. Die Kaskadenregelung wird aus drei Stromreglern gebildet, wobei diese auf dem jeweiligen Schalterpotential der Halbbrückenzweige liegen. Die Versorgung der drei auf dem jeweiligen Schalterpotential liegenden Stromregler erfolgt vorzugsweise durch ein geeignetes Schaltnetzteil mit drei galvanisch getrennten Ausgangsspannungen. Das Schalterpotential ist das Potential des negativen Shunt-Widerstand-Anschlusses.

Es wird zur Kaskadenregelung eine überlagerte Zwischenkreisspannungsregelung vorgesehen, welche die Spannung zwischen den Potentialen DC+ und DC-, sowie die Lage des Potentials des Zwischenkreismittelabgriffs DCM über die Sollwertvorgabe für die unterlagerten Stromregler regelt. Hierdurch lässt sich der gewünschte Leistungsfaktor einregeln, indem die Stromsollwerte für die unterlagerten Stromregler so vorgegeben werden, dass sich der gewünschte Leistungsfaktor durch die Stromform und Phasenlage der Sollwerte ergibt, während sich die gewünschte Zwischenkreisspannung durch die Amplitude der Sollwerte ergibt.

Es ist weiter vorgesehen, eine Symmetrierung der Potentiale an den Zwischenkreiskondensatoren zu erzielen und damit das Potential am Zwischenkreismittelabgriffs DCM entsprechend einzustellen. Dieses Ziel wird dadurch erreicht, dass jeweils ein vorzeichengleicher Sollstromanteil für alle drei unterlagerten Stromregler (Nullsystem) vorgegeben wird. In einer besonders vorteilhaften Ausführungsform erfolgt die Sollwertvorgabe für die unterlagerten Stromregler über eine galvanische Trennstrecke mittels Pulsweitenmodulation (PWM). Die PWM kann mit Hilfe von bekannten Optokopplern und/oder durch kapazitive bzw. induktive Koppler erzielt werden. In einer weiter vorteilhaften Ausführungsform sind die unterlagerten Stromregler als Spitzenstromregler ("Peak-Current-Mode"-Regler) ausgeführt. Die Stromregler schalten den jeweiligen Schalter S der zugeordneten Halbbrücken ein, sobald ein ebenfalls über die galvanische Trennstrecke übertragener, von der überlagerten Spannungsregelung generierter Synchronisationspuls auftritt. Infolge des Schaltens des Schalter S kommt es in der Netzphase zu einem betragsmäßigen Anstieg des Stromes.

Durch die Positionierung der jeweiligen Schalter und Shunt-Widerstände in die beiden Diodenbrücken ist der Stromfluss durch die Schalter und Shunt-Widerstände stets positiv und entspricht dem Betrag des Stromes in der jeweiligen Netzphase bzw. durch die PFC-Drosseln. Dieser Strom, der über die Schaltstrecke des Schalters fließt und demnach auch durch den Shunt-Widerstand, lässt sich im Durchlasszustand des Schalters S am Shunt-Widerstand messen. Der jeweilige Schalter wird abgeschaltet und der Strombetrag in der jeweiligen Netzphase sinkt sodann wieder ab, sobald der über die Spannung am Shunt-Widerstand gemessene Strombetrag den über die galvanische Trennstrecke vorgegebenen Sollwert übersteigt. Der Schalter bleibt hierbei solange ausgeschaltet, bis ein erneuter Synchronisationspuls erfolgt. Während der Totzeit des Schalter S, das heißt, wenn der Schalter in seiner Nichtdurchgangsstellung ist, kann mangels Stromfluss keine Detektion des Stromes am Shunt-Widerstand erfolgen.

In einer bevorzugten Ausgestaltung kann der unterlagerte Zweipunktstromregler mittels eines RS-Flip-Flops und einem Komparator realisiert werden. Das RS-Flip-Flop weist die Eingänge Setzen und Rücksetzen auf. Der Setzen-Eingang ist zum Empfang des Synchronisationsimpulses vorgesehen und folglich mit der überlagerten Regelung verbunden. Der Synchronisationspuls von der überlagerten Regelung dient, wie zuvor beschrieben, dem Einschalten der zugeordneten Schalter. Das Flip-Flop besitzt hierbei eine höhere Priorität für den Setzen-Eingang vor dem Rücksetzen-Eingang. Somit kann über die Dauer des Synchronisationspulses eine Mindesteinschaltzeit des Schalters sichergestellt werden. Der Rücksetzten-Eingang des Flip-Flops ist mit dem Ausgang des Komparators beschaltet, dessen positiver Eingang über ein RC-Tiefpassfilter zum Abfiltern von Störungen mit dem positiven Shunt-Anschluss der jeweiligen Halbbrücke verbunden ist. Der negative Eingang des Komparators ist mit dem Referenzsignalbezugspunkt für den Sollstrom verbunden. Der Ausgang des Flip-Flops ist über eine Gate-Treiber-Schaltung, bzw. einen Treiber-IC mit dem Gate des Leistungsschalters verbunden.

Als Bezugspotential aller Spannungen dient auf der dem Schalter zugewandten Seite der galvanischen Trennung das Schalterpotential, also das Potential des negativen Shunt-Anschlusses. Das Referenzsignal wird durch eine Tiefpassfilterung über einen RC-Filter 2.Ordnung aus dem gepufferten pulsweitenmodulierten (PWM) Sollstromsignal gewonnen. Durch die Pufferung des digitalen pulsweitenmodulierten (PWM) Signals mit einem Logikgatter, welches seine Versorgungsspannung aus einer sich auf der jeweils galvanisch getrennten Seite befindlichen Referenzspannungsquelle bezieht, kann nach der Tiefpassfilterung ein analoges Referenzstromsignal mit einem entsprechend der Pulsweite von Null bis zur Referenzspannung skalierten Spannungswert erzeugt werden.

Die überlagerte Zwischenkreisspannungsregelung besteht aus einem PI-Regler (proportional integral controller) für die Zwischenkreisspannung, welcher als Eingangsgröße die Regeldifferenz zwischen dem Zwischenkreisspannungssollwert und der Summe der Spannungen an den Zwischenkreiskondensatoren erhält. Ein weiterer PI-Regler wird zur Symmetrierung der Spannungen an den Zwischenkreiskapazitäten verwendet, d.h. ein Regeln des Potentials des Mittelabgriffs DCM auf den Mittelwert der Mittelkreispotentiale. Der PI-Regler erhält hierzu als Eingangssignal die Regeldifferenz aus den Spannungen an den Zwischenkreiskondensatoren. Das Ausgangssignal des Zwischenkreisspannungsreglers wird mit den Beträgen der Referenzsignale, das Ausgangssignal des Symmetriereglers mit dem Vorzeichen (+1, -1) der Referenzsignale multipliziert. Die Referenzsignale stellen ein normiertes dreiphasiges symmetrisches System, d.h. sinusförmig mit 120° Phasenversatz und einer Amplitude von eins dar. Die Referenzsignale werden über Sinusfunktionen aus dem Phasenwinkel einer auf die drei Netzspannungen synchronisierten dreiphasigen Phasenregelschleife (PLL) gewonnen, so dass deren Phasenlage den Netzsternspannungen entspricht. Die Ergebnisse der zur jeweiligen Phase gehörigen Multiplikation der Ausgangsgröße des Zwischenkreisspannungsreglers mit den Referenzsignalen und der Ausgangsgröße des Symmetriereglers mit den Referenzsignalen werden summiert und jeweils einem Pulsweitenmodulator zugeführt. Dieser Pulsweitenmodulator wandelt den zugeführten Stromsollwert in ein hochfrequentes pulsweitenmoduliertes Digitalsignal mit einer dem Stromsollwert proportionalen Pulsweite um, welche den unterlagerten Stromreglern über eine einfache und kostengünstige digitale galvanische Trennstrecke zugeführt wird (C-Koppler, I-Koppler, Optokoppler). Die Pulsfrequenz wird hierbei derart gewählt, dass diese eine Größenordnung über der Grenzfrequenz des Tiefpassfilters der unterlagerten Stromregler liegt, welche wiederum etwa eine Größenordnung oberhalb der maximal zu übertragenden Nutzfrequenz der Stromsollwerte liegt.

Um die durch das nicht ideale Regelverhalten der unterlagerten Stromregler im Netzstrom weiter auftretenden Stromoberwellen zu kompensieren, kann an Stelle der Erzeugung rein sinusförmiger Referenzsignale auch eine gezielte vorzeichenmäßig entgegengesetzte Injektion von harmonischen Referenzsignalen erfolgen. Auf diese Weise kann der Stromverzerrungsfaktor weiter verringert werden.

Die überlagerte Spannungsregelung beinhaltet ferner einen Pulsgenerator zur Erzeugung der Synchronisationspulse zum Setzen der Flip-Flops in den unterlagerten Stromreglern. Hierbei kann über die Dauer des positiven Pulses die Mindesteinschaltdauer der Leistungsschalter bestimmt werden. Die Pulsfrequenz des Synchronisationssignals legt die maximale Schaltfrequenz der Zweipunktregler fest.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine Schaltungstopologie eines Ausführungsbeispiels der vorliegenden Erfindung mit einer Kaskadenregelung;
- Fig.2: den strukturellen Aufbau eines Brückenzweigs;
- Fig. 3: die schematische Struktur einer überlagerten Zwischenkreisspannungsregelung;
- Fig.4: die schematische Struktur einer Zweipunktstromregelung auf Schalterpotential;
- Fig. 5: eine Schaltungstopologie einer Filterstruktur mit integrierten Brückenzweigen.

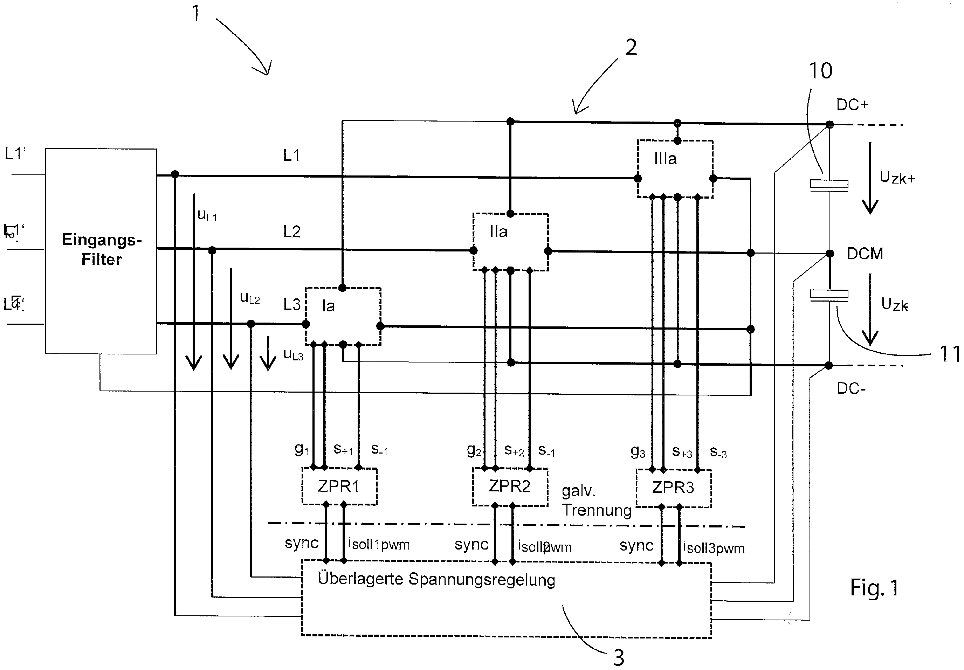

In der Figur 1 wird ein Ausführungsbeispiel einer erfindungsgemäßen Schaltungstopologie mit einer Kaskadenregelung dargestellt. Gezeigt ist ein Steuerungssystem 1 zur Anhebung des netzseitigen Leistungsfaktors λ von dreiphasig gespeisten EC-Motoren mit einem Gleichspannungszwischenkreis 2 zur Erzeugung eines positiven und negativen Zwischenkreispotentials DC+, DC- und einem dazwischen liegenden Potential am Zwischenkreismittelabgriff DCM. Das positive Zwischenkreispotentials DC+ bezeichnet das Potential am oberen Abgriff der Zwischenkreiskapazität 10, während das negative Zwischenkreispotential DC- das Potential am unteren Abgriff der Zwischenkreiskapazität 11 bezeichnet. Der Zwischenkreisspannungsanteil Uzk+ bezeichnet die Potentialdifferenz zwischen den Potentialen DC+ und DCM, während der Zwischenkreisspannungsanteil Uzk- die Potentialdifferenz zwischen den Potentialen DCM und DC- bezeichnet. Die Zwischenkreisspannung wird durch die Summe der Spannungsanteile Uzk+ und Uzk- gebildet.

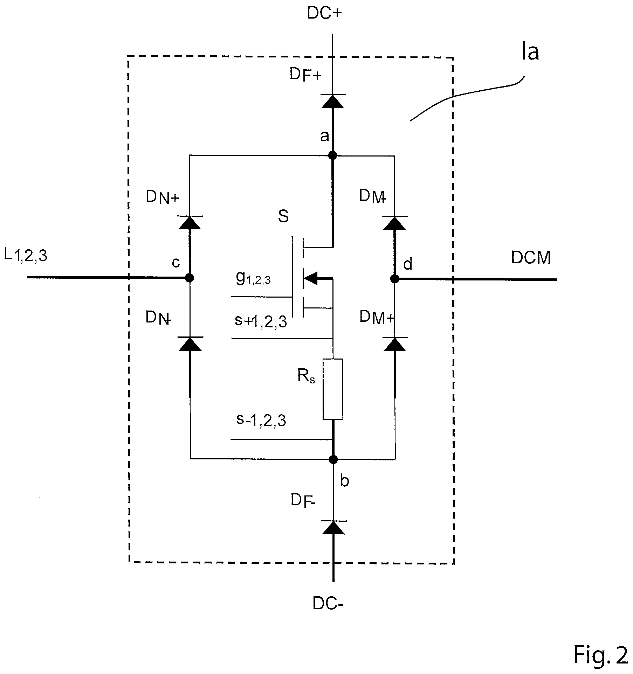

Das Steuerungssystem 1 umfasst drei aktive Brückenzweige la, IIa, IIIa, die später im Zusammenhang mit der Figur 2 noch näher beschrieben werden. Ferner sind drei unterlagerte Zweipunktstromregelungen ZPR1, ZPR2, ZPR3 vorgesehen. Diese sind mit einer überlagerten Zwischenkreisspannungsregelung 3 verbunden und können von der Zwischenkreisspannungsregelung 3 jeweils einen Synchronisationspuls empfangen sowie ein pulsweitenmoduliertes Sollstromsignal I_{soll1 pwm}, I_{soll2 pwm}, I_{soll3 pwm}. Die Zwischenkreisspannungsregelung 3 regelt die Potentialdifferenz zwischen den Mittelkreispotentialen DC+, DC- über die Sollwertvorgaben für die unterlagerten Zweipunktstromregler ZPR1, ZPR2, ZPR3. Zwischen der überlagerten Zwischenkreisspannungsregelung 3 und den unterlagerten Zweipunktstromregler ZPR1, ZPR2, ZPR3 befindet sich eine galvanische Trennung. Ferner weist das Steuerungssystem 1 einen Eingangsfilter auf, dessen Implementierung später noch näher beschrieben wird.

Die Figur 2 zeigt den strukturellen Aufbau eines aktiven Brückenzweigs, der repräsentativ für die drei Brückenzweige Ia, IIa, IIIa ist. Die aktiven Brückenzweige bestehen aus sechs Dioden DN+, DN-, DF+, DF-, DM+, DM- und einem aktiven Schalter S. Ferner wird in jedem Brückenzweige zur Strommessung zusätzlich ein Shunt-Widerstand Rs eingefügt. Jeder aktive Halbbrückenzweig weist vier Knotenpunkte a, b, c, d auf und besteht aus je zwei extrem schnellen Freilaufdioden DF+, DF- sowie zwei mittel-schnellen Mittelpunktsdioden DM+, DM- und zwei langsamen Netzdioden DN+, DN-. Die Verschaltung der Dioden ergibt sich unmittelbar aus dem Schaltplan und wurde überdies bereits zuvor detailliert beschrieben.

Der Zwischenkreismittelabgriff DCM ist jeweils am Knotenpunkt (d) mit der Kathode der Mittelpunktsdiode DM+ und der Anode der Mittelpunktsdiode DMverbunden.

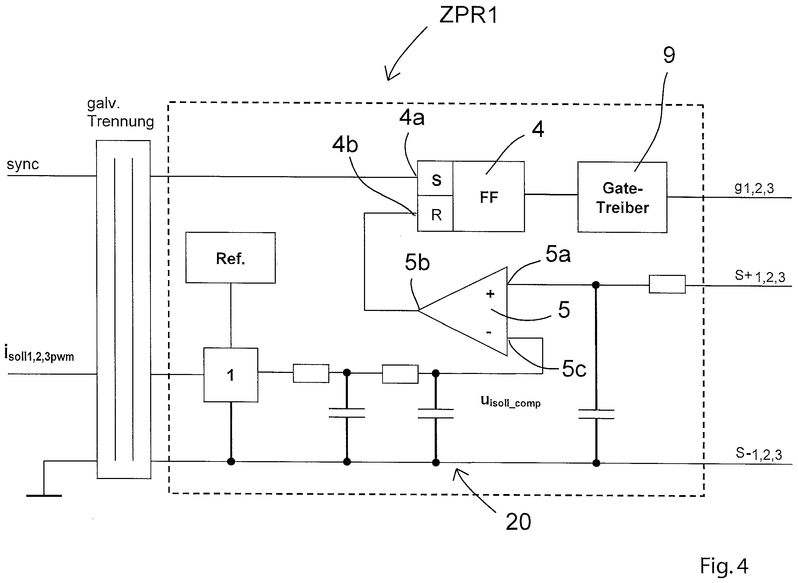

Die Anschlüsse S_{+1,2,3}, S_{-1,2,3} des jeweiligen Shunt-Widerstandes Rs, sowie das Gate des Schalters S dienen als Verbindung zu der auf dem jeweiligen Schalterpotential der Brückenzweige liegenden Stromregler ZPR1, ZPR2, ZPR3. Wie aus der Figur 4 ersichtlich, liegen die mit dem jeweiligen Stromregler ZPR1, ZPR2, ZPR3 verbundene Anschlüsse S-_{1,2,3} auf dem jeweiligen Bezugspotential. Das positive Zwischenkreispotential DC+ ist bezogen auf die Kathode der Freilaufdiode DF+, das negative Zwischenkreispotential DC- ist bezogen auf die Anode der Freilaufdiode DF-.

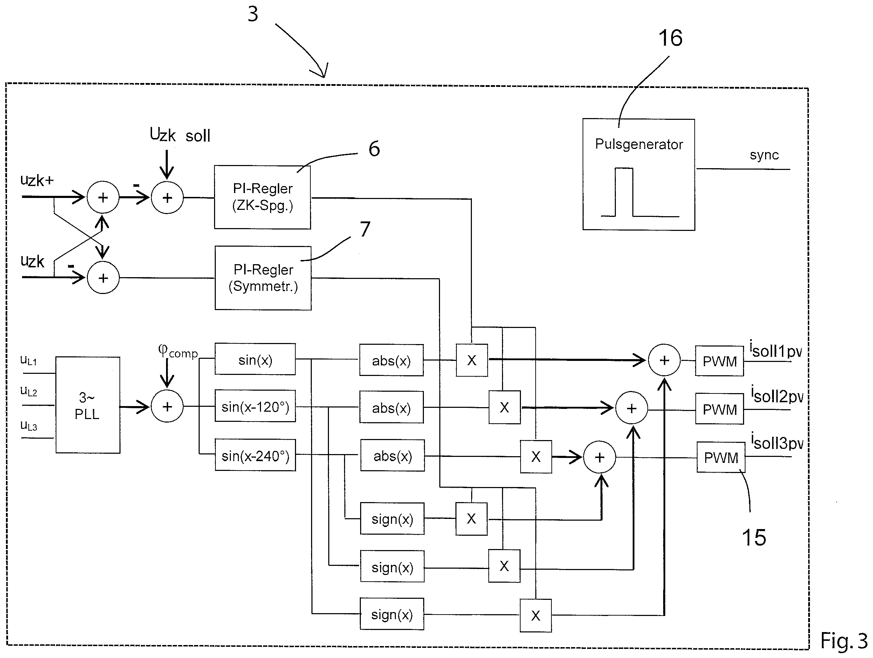

In der Figur 3 ist die schematische Struktur einer überlagerten Zwischenkreisspannungsregelung 3 gezeigt. Die Zwischenkreisspannungsregelung 3 regelt unter anderem die Lage des Potentials des Zwischenkreismittelabgriffs DCM über vorbestimmte Sollwertvorgaben für die unterlagerten Zweipunktstromregler ZPR1, ZPR2, ZPR3.

Die überlagerte Zwischenkreisspannungsregelung 3 besteht aus einem PI-Regler 6 für die Zwischenkreisspannung, welcher als Eingangsgröße die Regeldifferenz zwischen dem Zwischenkreisspannungssollwert U_{zk_soll} und der Summe der Spannungen an den Zwischenkreiskondensatoren U_{zk+} und U_{zk-} erhält. Zum Zwecke der Spannungssymmetrierung an den Zwischenkreiskapazitäten 10, 11 ist ein weiterer PI-Regler 7 vorgesehen, um das Regeln des Potentials des Mittelabgriffs DCM auf den Mittelwert der Potentiale DC+ und DC-, bzw. U_{zk+} gleich U_{zk-} vorzunehmen. Hierzu erhält dieser als Eingangssignal die Regeldifferenz = (U_{zk+} - U_{zk-}). Das Ausgangssignal der Zwischenkreisspannungsreglung 3 wird mit den Beträgen der Referenzsignale, das Ausgangssignal des Symmetriereglers mit dem Vorzeichen der Referenzsignale multipliziert. Die Referenzsignale werden über Sinusfunktionen aus dem Phasenwinkel ϕ einer auf die drei Netzspannungen U_{L1}, U_{L2}, U_{L3} synchronisierten dreiphasigen Phasenregelschleife PLL gewonnen, so dass deren Phasenlage den Netzsternspannungen entspricht. Die Ergebnisse der zur jeweiligen Phase gehörigen Multiplikation der Ausgangsgröße des Zwischenkreisspannungsreglers mit den Referenzsignalen und der Ausgangsgröße des Symmetriereglers mit den Referenzsignalen werden summiert und jeweils einem Pulsweitenmodulator 15 zugeführt. Die überlagerte Zwischenkreisspannungsregelung 3 weist ferner einen Pulsgenerator 16 zur Erzeugung der Synchronisationspulse auf.

In der Figur 4 ist die schematische Struktur einer Zweipunktstromregelung ZPR1, ZPR2, ZPR3 auf Schalterpotential gezeigt. Jeder der unterlagerten Zweipunktstromregler ZPR1, ZPR2, ZPR3 weist einen RS-Flip-Flop 4 mit zwei Eingängen 4a, 4b und einen Komparator 5 auf. Das Flip-Flop 4 besitzt hierbei eine höhere Priorität für den Setzen-Eingang 4a vor dem Rücksetzen-Eingang 4b. Der Eingang 4a ist der Setzen-Eingang zum Empfang des Synchronisationspulses zum Einschalten der Schalter S, welcher von der überlagerten Zwischenkreisspannungsregelung 3 erzeugt wird. Der Rücksetzten-Eingang 4b des Flip-Flops 4 ist mit dem Ausgang 5b des Komparators 5 beschaltet, dessen positiver Eingang 5a über ein RC-Tiefpassfilter mit dem positiven Shunt-Anschluss S+ des jeweiligen Brückenzweiges la, IIa, IIIa verbunden ist. Der negative Eingang 5c des Komparators 5 ist mit dem Referenzsignal über den RC-Tiefpassfilter 20 für den Sollstrom U_{isoll_comp} verbunden, das aus dem gepufferten pulsweitenmodulierten Sollstromsignal i_{soll1,2,3pwm} gewonnen wird. Das Ausgangssignal des Flip-Flops 4 ist über eine Gate-Treiber-Schaltung 9 mit dem Gate des Leistungsschalters g_{1,2,3} verbunden.

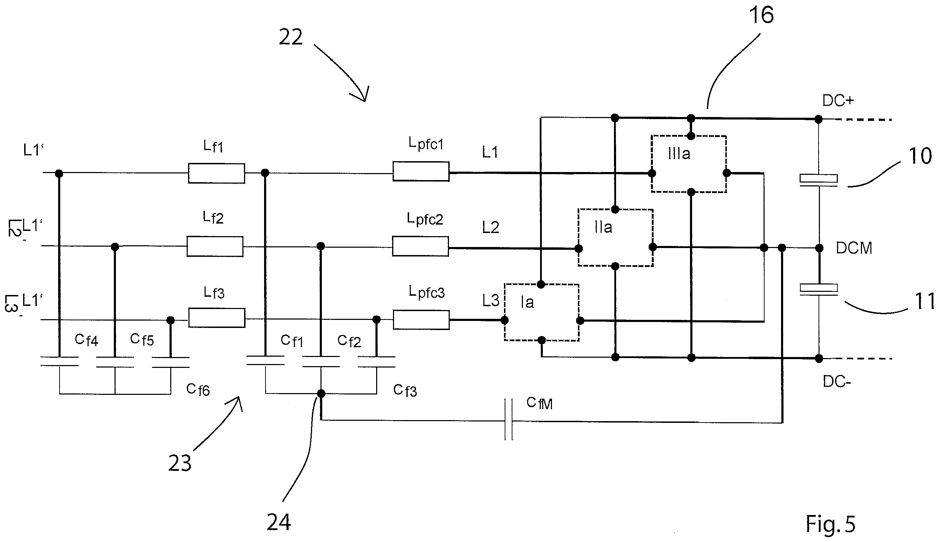

Die Figur 5 stellt eine Schaltungstopologie einer Filterstruktur 22 mit den integrierten Brückenzweigen la, IIa, IIIa dar. Um Wiederholungen zu vermeiden, wird bezüglich der Funktionsweise der Filterstruktur auf die vorherige Beschreibung verwiesen und im Folgenden nur die strukturelle Topologie erläutert. Die Netzphasen werden mit L1, L2 und L3 bezeichnet. Jeder Brückenzweige la, IIa, IIIa ist mit einer der Netzphasen am jeweiligen Knoten c verbunden. Gezeigt ist ferner ein zweistufiger LC-Filter 23 sowie die erläuterte kapazitive Rückkopplung des Sternpunktes 24 der Filterkapazitäten zum Zwischenkreismittelabgriff DCM. Die Rückkopplung erfolgt über den Kondensator C_{fM}. Der LC-Filter 23 umfasst jeweils drei PFC-Drosseln L_{pfc1} bis L_{pfc3} und die Kondensatoren C_{f1} bis C_{f3} sowie die drei Drosseln L_{f1} bis L_{f3} und die Kondensatoren C_{f4} bis C_{f6}.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann auch ein einstufiger LC-Filter 23 statt eines zweistufigen Filters verwendet werden.

## Patentansprüche

1. Steuerungssystem (1) zur Anhebung des netzseitigen Leistungsfaktors λ von dreiphasig gespeisten EC-Motoren mit einem Gleichspannungszwischenkreis (2) mit einem Zwischenkreismittelabgriff (DCM) zur Erzeugung eines positiven und negativen Zwischenkreispotentials (DC+, DC-) umfassend drei aktive Brückenzweige (la, IIa, IIIa), die jeweils mit einer unterlagerten Zweipunktstromregelung (ZPR1, ZPR2, ZPR3) und jeweils über diese mit einer überlagerten Zwischenkreisspannungsregelung (3) verbunden sind, welche die Potentialdifferenz zwischen den Zwischenkreispotentialen (DC+, DC-) über Sollwortvorgaben für die unterlagerten Zweipunktstromregler (ZPR1, ZPR2, ZPR3) regelt, wobei jeder der aktiven Brückenzweige (Ia, IIa, IIIa) aus jeweils sechs Dioden (DN+, DN-, DF+, DF-, DM+, DM-) und einem aktiven Schalter (S) gebildet wird,
**daduch gekennzeichnet** dass jeder der aktiven Brückenzweige darüber hinaus aus einem mit der Schaltstrecke (D-S) des Schalters (S) in Reihe geschaltetem Shunt-Widerstand (Rs) gebildet wird und die beiden Dioden (DF+, DF-) als schnell schaltende Freilaufdioden in Serie mit den beiden Dioden (DM+, Dom-), die als mittelschnelle Mittelpunktsdioden und in Serie mit den beiden dazu parallel geschalteten Dioden (DN+, DN-), die als langsame Netzdioden ausgebildet sind, geschaltet sind, wobei der Strom, der durch den Shunt-Widerstand (Rs) fliesst im Durchlasszustand des Schalters S am Shunt-Widerstand gemessen wird und der jeweilige Schalter (S) abgeschaltet wird, wodurch der Strombetrag in der jeweiligen Netzphase sodann wieder absinkt, sobald der über die Spannung am Shunt-Widerstand (Rs) gemessene Strombetrag einen vorgegebenen Sollwert übersteigt.

2. Steuerungssystem (1) gemäß Anspruch 1, **dadurch gekennzeichnet, dass** ferner jeder Brückenzweig (la, IIa, IIIa) mit einem netzseitigen ein- oder zweistufigen LC-Filter verbunden ist

3. Steuerungssystem (1) gemäß Anspruch 1 oder 2, **dadurch gekennzeichnet, dass** die Zwischenkreisspannungsregelung (3) ferner die Lage des Potentials des Zwischenkreismittelabgriffs (DCM) über vorbestimmte Sollwortvorgaben für die unterlagerten Zweipunktstromregler (ZPR1, ZPR2, ZPR3) regelt.

4. Steuerungssystem (1) gemäß einem der vorhergehenden Ansprüche, **dadurch gekennzeichnet dass** jeder der aktiven Brückenzweige (la, IIa, IIIa) vier Knotenpunkte (a, b, c, d) aufweist.

5. Steuerungssystem (1) gemäß einem der vorhergehenden Ansprüche, **dadurch gekennzeichnet, dass** an den jeweiligen Knotenpunkten (a) die Kathoden der langsamen Netzdiode (DN+) und der Mittelpunktsdiode (DM-) sowie die Anode der schnellen Freilaufdiode (DF+) und der Kollektor-Anschluss (D) des Schalters (S) verbunden sind, während am Knotenpunkt (b) die Anoden der Netzdiode (DN-) und der Mittelpunktsdiode (DM+) sowie die Kathode der Freilaufdiode (DF-) und der negative Anschluss des Shunt-Widerstandes (Rs) verbunden sind.

6. Steuerungssystem (1) gemäß einem der vorhergehenden Ansprüche, **dadurch gekennzeichnet, dass** an den jeweiligen Knotenpunkten (c) jeweils die Kathode der Netzdiode (DN-) sowie die Anode der Netzdiode (DN+) und ferner eine Verbindung zu einer Netzphase (L1, L2, L3) zusammengeschaltet sind.

7. Steuerungssystem (1) gemäß einem der vorhergehenden Ansprüche 5 oder 6, **dadurch gekennzeichnet, dass** der Knotenpunkte (d) jedes aktiven Brückenzweigs (Ia, IIa, IIIa) mit dem Zwischenkreismittelabgriff (DCM) verbunden ist, sowie jeweils mit der Kathode der Mittelpunktsdiode (DM+) und der Anode der Mittelpunktsdiode (DM-) des betroffenen Brückenzweigs.

8. Steuerungssystem (1) gemäß einem der vorhergehenden Ansprüche 5 - 7, **dadurch gekennzeichnet, dass** jeweils der positive Anschluss der Shunt-Widerstände (Rs) des jeweiligen Brückenzweigs (la, IIa, IIIa) mit dem Emitter des aktiven Schalters (S) des betroffenen Brückenzweigs (Ia, IIa, IIIa) verbunden ist.

9. Steuerungssystem (1) gemäß einem der vorhergehenden Ansprüche, **dadurch gekennzeichnet, dass** die unterlagerte Zweipunktstromregelung (ZPR1, ZPR2, ZPR3) jeweils mittels eines RS-Flip-Flops (4) und einem Komparator (5) realisiert wird, wobei ein Setzen-Eingang (4a) des RS-Flip-Flops (4) zum Empfang eines Synchronisationsimpulses mit der überlagerten Zwischenkreisspannungsregelung (3) verbunden ist.

10. Steuerungssystem (1) gemäß Anspruch 9, **dadurch gekennzeichnet, dass** ein Rücksetzten-Eingang (4b) des Flip-Flops (4) mit dem Ausgang des Komparators (5) beschaltet ist und dessen positiver Eingang (5a) über ein RC-Tiefpassfilter zum Abfiltern von Störungen mit einem positiven Shunt-Anschluss (S+) des jeweiligen Brückenzweigs (la, IIa, IIIa) verbunden ist.

11. Steuerungssystem (1) gemäß einem der vorhergehenden Ansprüche, **dadurch gekennzeichnet, dass** die überlagerte Zwischenkreisspannungsregelung (3) einen ersten PI-Regler (6) für die Zwischenkreisspannung sowie einen zweiten PI-Regler (7) zur Symmetrierung der Spannungen an zwei Zwischenkreiskapazitäten (10, 11) zum Regeln des Potentials des Zwischenkreismittelabgriffs (DCM) auf den Mittelwert der Mittelkreispotentiale (DCM+, DC-) sowie eine kapazitive Rückkopplung zum Zwischenkreismittelabgriff (DCM) aufweist.

12. Verfahren zur Anhebung des netzseitigen Leistungsfaktors A von dreiphasig gespeisten EC-Motoren mit einem Gleichspannungszwischenkreis (2) unter Verwendung eines Steuersystems (1) gemäß zumindest einem der Ansprüche 1 -11 mit wenigstens einem der folgenden Schritte:
a. Regelung der Mittelkreispotentiale (DCM+, DC-) sowie der Lage des Potentials des Zwischenkreismittelabgriffs (DCM) über eine Sollwertvorgabe für die unterlagerten Zweipunktstromregler (ZPR1, ZPR2, ZPR3);
b. Symmetrierung der Mittelkreispotentiale (DC+, DC-) an den Zwischkreiskondensatoren (10, 11) dadurch, dass jeweils ein vorzeichengleicher Sollstromanteil für alle drei unterlagerten Zweipunktstromregler (ZPR1, ZPR2, ZPR3) vorgegeben wird;
c. Schalten der jeweiligen Schalter (S), sobald ein von der überlagerten Zwischenkreisspannungsregelung (3) generierter Synchronisationspuls empfangen wird, wobei der Strom, der durch den Shunt-Widerstand (Rs) fliesst im Durchlasszustand des Schalters S am Shunt-Widerstand (Rs) gemessen wird und der jeweilige Schalter (S) abgeschaltet wird, wodurch der Strombetrag in der jeweiligen Netzphase sodann wieder absinkt, sobald der über die Spannung am Shunt-Widerstand (Rs) gemessene Strombetrag einen vorgegebenen Sollwert übersteigt.

## Claims

1. Control system (1) for raising the mains-side power factor λ of three-phase fed EC motors having a dc voltage intermediate circuit (2) with an intermediate circuit center tap (DCM) for generating a positive and negative intermediate circuit potential (DCM+, DC-), the control system comprising three active bridge arms (la, IIa, IIIa), each of which are connected to a subordinate two-point current control (ZPR1, ZPR2, ZPR3) and in each case via the latter to a superimposed intermediate circuit voltage control (3), which controls a potential difference between the intermediate circuit potentials (DC+, DC-) via set point settings for the subordinate two-point current controllers (ZPR1, ZPR2, ZPR3), wherein each of the active bridge arms (la, IIa, IIIa) are formed in each case from six diodes (DN+, DN-, DF+, DF-, DM+, DM-) and an active switch (S),
**characterised in that**
each of the active bridge arms is formed furthermore by a shunt resistor (Rs) connected in series with a switching path (D-S) of the switch (S), and two diodes (DF+, DF-) are designed as rapidly switching free-wheeling diodes in series with the two diodes (DM+, DM-) as medium-rapid midpoint diodes and in series with the two diodes (DN+, DN-) as slow mains diodes connected in parallel, wherein
the current flowing through the shunt resistor (Rs) in passage condition of switch S is measured at the shunt resistor and the respective switch (S) is switched off, whereby the current amount in the respective mains phase as soon the current amount measured by the voltage at shunt resistor (Rs) exceeds a given set point

2. Control system (1) according to claim 1, wherein each bridge arm (Ia, IIa, IIIa) is also connected to a mains-side one- or two-stage LC filter.

3. Control system (1) according to claim 1 or 2, wherein the intermediate circuit voltage control (3) also controls a position of the potential of the intermediate circuit center tap (DCM) via a predetermined set point setting for the subordinate two-point current controllers (ZPR1, ZPR2, ZPR3).

4. Control system (1) according to one of the preceding claims, wherein each of the active bridge arms (Ia, IIa, IIIa) include four nodes (a, b, c, d).

5. Control system (1) according to one of the preceding claims, wherein a cathode of one of the slow mains diodes (DN+) and one of the midpoint diodes (DM-), an anode of one of the rapid freewheeling diodes (DF+) and a collector terminal (D) of the active switch (S), are connected at a first node (a), whereas an anode of the other slow mains diode (DN-) and the other midpoint diode (DM+), a cathode of the other freewheeling diode (DF-) and a negative terminal of a shunt resistor (Rs), are connected at a second node (b).

6. Control system (1) according to one of the preceding claims, wherein the cathode of the one of the mains diodes (DN-); the anode of the other mains diode (DN+) and, a connection to a mains phase (L1, L2, L3), are each interconnected at a third node (c).

7. Control system (1) according to one of the preceding claims 5 or 6, wherein a node (d) of each active bridge arm (Ia, IIa, IIIa) is connected to the intermediate circuit center tap (DCM) as well as to the cathode of the one of the mid-point diodes (DM+) and to the anode of the other midpoint diode (DM-) of the relevant bridge arm.

8. Control system (1) according to one of the preceding claims 5 - 7, wherein a positive terminal of a shunt resistor (Rs) of a respective bridge arm (la, IIa, IIIa) is connected to an emitter of the active switch (S) of a relevant bridge arm (Ia, IIa, IIIa).

9. Control system (1) according to one of the preceding claims, wherein the sub-ordinate two-point current regulators (ZPR1, ZPR2, ZPR3) is implemented by a RS flip-flop (4) and a comparator (5), wherein a setting input (4a) of the RS flip-flop (4) for receiving a synchronization pulse is connected to the superimposed intermediate circuit voltage control (3).

10. Control system (1) according to claim 9, wherein a resetting input (4b) of the flip-flop (4) is connected to an output of the comparator (5) and a positive input (5a) thereof is connected via a RC low-pass filter for filtering interferences to a positive shunt terminal (S+) of a respective bridge arm (Ia, IIa, IIIa).

11. Control system (1) according to one of the preceding claims, wherein the superimposed intermediate circuit voltage control (3) includes a first PI controller (6) for the intermediate circuit voltage, a second PI controller (7) for balancing voltages at two intermediate circuit capacitances (10, 11) for adjusting a potential of the intermediate circuit center tap (DCM) to a mean value of the intermediate circuit potentials (DC+, DC-), as well as a capacitive feedback to the intermediate circuit center tap (DCM).

12. Method for raising the mains-side power factor λ of three-phase fed EC motors having a dc voltage intermediate circuit (2), using a control system (1) according to at least one of the claims 1 - 11, the method comprising at least one of the following steps:
a. Controlling the intermediate circuit potentials (DC+, DC-) as well as a position of the potential of the intermediate circuit center tap (DCM) via a set point setting for the subordinate two-point current controllers (ZPR1, ZPR2, ZPR3);
b. Balancing a middle circuit potentials (DC+, DC-) at intermediate circuit capacitors (10, 11) by prescribing in each case a sign-equivalent set current component for all three subordinate two-point current controllers (ZPR1, ZPR2, ZPR3);
c. Switching a respective switch (S) as soon as a synchronization pulse generated by the superimposed intermediate circuit voltage control (3) is received, wherein the current flowing through the shunt resistor (Rs) in passage condition of switch S is measured at the shunt resistor and the respective switch (S) is switched off, whereby the current amount in the respective mains phase as soon the current amount measured by the voltage at shunt resistor (Rs) exceeds a given set point

## Revendications

1. Système de commande (1) pour l'augmentation du facteur de puissance côté réseau λ de moteurs à commutation électronique triphasés avec un circuit intermédiaire à courant continu (2) avec une prise médiane de circuit intermédiaire (DCM) pour la génération d'un potentiel de circuit intermédiaire positif et négatif (DC+, DC-), comprenant trois branches de pont (Ia, IIa, IIIa) actives qui sont reliées respectivement avec une régulation de courant à deux points sous-jacente (ZPR1, ZPR2, ZPR3) et respectivement par celle-ci à une régulation de tension de circuit intermédiaire (3) sus-jacente, qui régule la différence de potentiel entre les potentiels de circuit intermédiaire (DC+, DC-) par des prescriptions de valeur de consigne pour les régulateurs de courant à deux points sous-jacents (ZPR1, ZPR2, ZER3). dans lequel chacune des branches de pont actives (Ia, IIa, IIIa) est formée à partir de respectivement six diodes (DN+, DN-, DF+, DF-, DM+, DM-) et un commutateur actif (S),
**caractérisé en ce que**
chacune des branches de pont actives est en outre formée d'une résistance de dérivation (Rs) montée en série avec le circuit de computation (D-S) du commutateur (S) et les deux diodes (DF+, DF-) sont montées comme des diodes de roue libre à computation rapide en série avec les deux diodes (DM+, DM-) qui sont montées comme des diodes de point médian à moyenne vitesse et en série avec les deux diodes (DN+, DN-) montées parallèles à celles-ci qui sont réalisées comme des diodes de réseau lentes, dans lequel le courant qui passe par la résistance de dérivation (Rs) est mesuré dans l'état de passage du commutateur S sur la résistance de dérivation et le commutateur respectif (S) est éteint, par quoi la somme de courant baisse de nouveau dans la phase de réseau respective dès que la somme de courant mesurée par la tension sur la résistance de dérivation (Rs) dépasse une valeur de consigne prescrite.

2. Système de commande (1) selon la revendication 1, **caractérisé en ce que** chaque branche de pont (Ia, IIa, IIIa) est de plus reliée avec un filtre LC à un ou deux étages côté réseau.

3. Système de commande (1) selon la revendication 1 ou 2, **caractérisé en ce que** la régulation de tension de circuit intermédiaire (3) régule de plus la position du potentiel de la prise médiane de circuit intermédiaire (DCM) par des prescriptions de valeur de consigne prédéterminées pour les régulateurs de courant à deux points sous-jacents (ZPR1, ZPR2, ZPR3).

4. Système de commande (1) selon l'une quelconque des revendications précédentes, **caractérisé en ce que** chacune des branches de pont actives (Ia, IIa, IIIa) présente quatre ponts de noeuds (a, b, c, d).

5. Système de commande (1) selon l'une quelconque des revendications précédentes, **caractérisé en ce que** sur les points de noeud respectifs (a), les cathodes de la diode de réseau lente (DN+) et de la diode de point médian (DM-) ainsi que l'anode de la diode de roue libre rapide (DF+) et le raccordement de collecteur (D) du commutateur (S) sont reliés alors que sur le point de noeuds (b), les anodes de la diode de réseau (DN-) et de la diode de point médian (DM+) ainsi que la cathode de la diode à roue libre (DF-) et le raccordement négatif de la résistance de dérivation (Rs) sont reliés.

6. Système de commande (1) selon l'une quelconque des revendications précédentes, **caractérisé en ce que** respectivement la cathode de la diode de réseau (DN-) ainsi que l'anode de la diode de réseau (DN+) et de plus, une liaison à une phase de réseau (L1, L2, L3) sont montés ensemble sur les points de noeuds respectifs (c).

7. Système de commande (1) selon l'une quelconque des revendications précédentes 5 ou 6, **caractérisé en ce que** le point de noeud (d) de chaque branche de pont active (Ia, IIa, IIIa) est relié à la prise médiane de circuit intermédiaire (DCM), ainsi que respectivement à la cathode de la diode de point médian (DM+) et à l'anode de la diode de point médian (DM-) de la branche de pont concernée.

8. Système de commande (1) selon l'une quelconque des revendications précédentes 5 à 7, **caractérisé en ce que** respectivement le raccordement positif des résistances de dérivation (Rs) de la branche de pont respective (Ia, IIa, IIIa) est relié à l'émetteur du commutateur actif (S) de la branche de pont concernée (Ia, IIa, IIIa).

9. Système de commande (1) selon l'une quelconque des revendications précédentes, **caractérisé en ce que** la régulation de courant à deux points sous-jacente (ZPR1, ZPR2, ZPR3) est réalisée respectivement à l'aide d'une bascule bistable RS (4) et d'un comparateur (5), dans lequel une entrée de placement (4a) de la bascule bistable RS (4) est reliée pour la réception d'une impulsion de synchronisation à la régulation de tension de circuit intermédiaire (3) sus-jacente.

10. Système de commande (1) selon la revendication 9, **caractérisé en ce qu'**une entrée de réinitialisation (4b) de la bascule bistable (4) est raccordée à la sortie du comparateur (5) et son entrée positive (5a) est reliée par un filtre passe-bas RC pour la filtration de perturbations avec un raccord de dérivation positif (S+) de la branche de pont (Ia, IIa, IIIa) respective.

11. Système de commande (1) selon l'une quelconque des revendications précédentes, **caractérisé en ce que** la régulation de tension de circuit intermédiaire (3) susjacente présente un premier régulateur PI (6) pour la tension de circuit intermédiaire ainsi qu'un second régulateur PI (7) pour la symétrisation des tensions sur deux capacités de circuit intermédiaire (10, 11) pour la régulation du potentiel de la prise médiane de circuit intermédiaire (DCM) sur la valeur médiane des potentiels de circuit médian (DCM+, DC-) ainsi qu'une rétroaction capacitive pour la prise médiane de circuit intermédiaire (DCM).

12. Procédé d'augmentation du facteur de puissance côté réseau λ de moteurs à commutation électronique triphasés avec un circuit intermédiaire de courant continu (2) en utilisant un système de commande (1) selon au moins l'une des revendications 1 à 11 avec au moins l'une des étapes suivantes :
a. régulation des potentiels de circuit médian (DCM+, DCM-) ainsi que de la position du potentiel de la prise médiane de circuit intermédiaire (DCM) par une prescription de valeur de consigne pour le régulateur de courant à deux points (ZPR1, ZPR2, ZPR3) sous-jacent ;
b. symétrisation des potentiels de circuit médian (DC+, DC-) sur les condensateurs de circuit intermédiaire (10, 11) du fait que respectivement une part de courant de consigne à signe identique pour tous les trois régulateurs de courant à deux points (ZPR1, ZPR2, ZPR3) sous-jacents est prescrite ;
c. commutation des commutateurs respectifs (S) dès qu'une impulsion de synchronisation générée par la régulation de tension de circuit intermédiaire (3) sus-jacente est reçue, dans lequel le courant qui passe par la résistance de dérivation (Rs), est mesuré dans l'état de passage du commutateur S sur la résistance de dérivation (Rs) et le commutateur respectif (S) est éteint, par quoi la somme de courant diminue dans la phase de réseau respective de nouveau dès que la somme de courant mesurée par la tension sur la résistance de dérivation (Rs) dépasse une valeur de consigne prescrite.
